# EUROPEAN PATENT SPECIFICATION

(11) **EP 3 466 159 B1**
(45) Date of publication and mention of the grant of the patent: **18.09.2019**
(21) Application number: 16903895.7
(22) Date of filing: 31.05.2016
(51) Int. Cl.: H04W 40/04, H04W 40/18, H04W 40/20, H04W 84/22, H04W 36/18, H04W 36/32, H04L 29/08, H04L 29/06, H04W 36/02, H04W 4/029, H04W 4/02, H04W 4/42

(54) **METHOD AND SYSTEM FOR DYNAMIC MANAGEMENT OF MULTIMEDIA CONTENT IN VEHICLES**
VERFAHREN UND SYSTEM ZUR DYNAMISCHEN VERWALTUNG VON MULTIMEDIA-INHALTEN IN FAHRZEUGEN
PROCÉDÉ ET SYSTÈME DE GESTION DYNAMIQUE DE CONTENU MULTIMÉDIA DANS DES VÉHICULES

(43) Date of publication of application: 10.04.2019
(73) Proprietor: Teleste Oyj, 20660 Littoinen (FI)
(72) Inventor: VÄRE, Jani, 20780 Kaarina (FI); ALAMAUNU, Jyrki, 20720 Turku (FI); VIRTANEN, Kari, 21160 Naantali (FI); RITAKALLIO, Ilkka, 20810 Turku (FI)
(74) Representative: Berggren Oy, Tampere
(86) International application number: PCT/FI2016/050385
(87) International publication number: WO 2017/207862

(56) References cited:
- US-A1- 2010 020 774
- US-A1- 2010 020 774
- US-A1- 2011 164 562
- US-A1- 2011 164 562
- US-A1- 2014 274 069
- US-A1- 2014 274 069
- US-A1- 2016 081 003
- US-A1- 2016 081 003
- VASILIOS A SIRIS ET AL: "Enhancing mobile data offloading with mobility prediction and prefetching", MOBILITY IN THE EVOLVING INTERNET ARCHITECTURE, ACM, 2 PENN PLAZA, SUITE 701 NEW YORK NY 10121-0701 USA, 22 August 2012 (2012-08-22), pages 17-22, XP058009281, DOI: 10.1145/2348676.2348682 ISBN: 978-1-4503-1526-5
- SIRIS, V ET AL.: 'Enhancing mobile data offloading with mobility prediction and prefetching' PROCEEDINGS OF THE SEVENTH ACM INTERNATIONAL WORKSHOP ON MOBILITY IN THE EVOLVING INTERNET ARCHITECTURE, [Online] August 2012, XP058009281 Retrieved from the Internet: <URL:http://dx.doi.org/10.1145/2348676.2348 682> [retrieved on 2016-08-09]

## Description

### Technical field

The invention relates to wireless data transmission in vehicular systems.

### Background

It may be desirable for a passenger in a public transport to have a chance to entertain oneself by watching movies or other multimedia content. As different multimedia devices have become popular, many passenger has a multimedia device of his own.

Today it may be possible to consume multimedia content on-board based on a predefined, fixed selection of content provided from the local multimedia server or through wireless access to the Internet. However, the Internet access is typically limited due to vast amount of passengers on-board, simultaneously consuming the network capacity. When compared the fixed selection with that available through Internet connection, the selection is typically limited. It may be desirable for the passenger to be able to choose the multimedia content from a more versatile selection. US 2016/0081003 A1 describe the relevant prior art.

### Summary

Now, an improved arrangement has been developed to reduce the above-mentioned problems. As different aspects of the invention, we present a method, a server, a system, and a computer program product, which are characterized in what will be presented in the independent claims.

The dependent claims disclose advantageous embodiments of the invention.

The first aspect of the invention comprises a method comprising receiving information about a multimedia content to be delivered to at least one passenger in a vehicle; receiving information about a route of the at least one passenger; locating a first and a second wireless link along the route and a first and a second storage device in functional connection with a corresponding wireless link; determining a duration of playback of the multimedia content; splitting the multimedia content into a first and a second piece of data based at least partly on a predefined stopping schedule of the vehicle within range of the first and the second wireless link; distributing the first and the second piece of data to the first and the second storage device, respectively; delivering, in response to the vehicle stopping within range of the first wireless link, the first piece of data to at least one data storage in the vehicle for further delivery to the at least one passenger; and delivering, in response to the vehicle stopping within range of the second wireless link, the second piece of data to the at least one data storage in the vehicle for further delivery to the at least one passenger.

According to an embodiment, the splitting the multimedia content into the first and the second piece of data comprises determining a duration of playback of the first piece of data to correspond to at least a predetermined travel time of the vehicle from the first wireless link to the second wireless link.

According to an embodiment the method further comprises locating a third wireless link along the route and a third storage device in functional connection with the third wireless link; and wherein splitting the multimedia content into the first and the second piece of data comprises determining a duration of playback of the second piece of data to correspond to at least a predetermined travel time of the vehicle from the second wireless link to the third wireless link.

According to an embodiment the distributing the first and the second piece of data to the first and the second storage device, respectively, is performed prior to the vehicle stops within range of the corresponding wireless link.

According to an embodiment the method further comprises determining location of the at least one data storage in the vehicle stopping within range of the first wireless link, the first wireless link comprising a directional antenna; forming a transmission direction for wireless delivery based on the location of the at least one data storage in the vehicle; and delivering the first piece of data to the transmission direction.

According to an embodiment the wireless links are operated according to wireless access technology defined in IEEE standard 802.11 ad.

A second aspect of the invention includes a server arranged to receive information about a multimedia content to be delivered to at least one passenger in a vehicle; receive information about a route of the at least one passenger; locate a first and a second wireless link along the route and a first and a second storage device in functional connection with a corresponding wireless link; determine a duration of playback of the multimedia content; split the multimedia content into a first and a second piece of data based at least partly on a predefined stopping schedule of the vehicle within range of the first and the second wireless link; distribute the first and the second piece of data to the first and the second storage device, respectively; deliver, in response to the vehicle stopping within range of the first wireless link, the first piece of data to at least one data storage in the vehicle for further delivery to the at least one passenger; and deliver, in response to the vehicle stopping within range of the second wireless link, the second piece of data to the at least one data storage in the vehicle for further delivery to the at least one passenger.

According to an embodiment, the server is arranged to perform the method of any of the embodiments above.

A third aspect of the invention includes a computer program product, comprising computer program code embodied on a computer readable medium, wherein said computer program code is, when executed on a processor of a computer, arranged to cause the computer to perform the method of any of the embodiments above.

A fourth aspect of the invention includes a method comprising receiving information on a passenger of a vehicle, the information comprising at least identification data of a multimedia device of the passenger; information about a route; information about a multimedia content to be delivered to the passenger; receiving, in response to the vehicle stopping within range of a first wireless link located along the route, in at least one data storage in the vehicle a first piece of the multimedia content; delivering the first piece of the multimedia content to the multimedia device of the passenger; receiving, in response to the vehicle stopping within range of a second wireless link located along the route, in the at least one data storage in the vehicle a second piece of the multimedia content; and delivering the second piece of the multimedia content to the multimedia device of the passenger.

According to an embodiment, delivering at least one piece of the multimedia content to the multimedia device of the passenger is performed in response to a request from the multimedia device.

According to an embodiment, delivering at least one piece of the multimedia content to the multimedia device of the passenger is performed as a push-based delivery.

According to an embodiment, a duration of playback of the first piece of the multimedia content corresponds to at least a predetermined travel time of the vehicle from the first wireless link to the second wireless link.

A fifth aspect of the invention includes a server arranged to receive information on a passenger of a vehicle, the information comprising at least identification data of a multimedia device of the passenger; information about a route; information about a multimedia content to be delivered to the passenger; receive, in response to the vehicle stopping within range of a first wireless link located along the route, in at least one data storage in the vehicle a first piece of the multimedia content; deliver the first piece of the multimedia content to the multimedia device of the passenger; receive, in response to the vehicle stopping within range of a second wireless link located along the route, in the at least one data storage in the vehicle a second piece of the multimedia content; and deliver the second piece of the multimedia content to the multimedia device of the passenger.

According to an embodiment, the server is arranged to perform the method of any of the embodiments above.

A sixth aspect of the invention includes a computer program product, comprising computer program code embodied on a computer readable medium, wherein said computer program code is, when executed on a processor of a computer, arranged to cause the computer to perform the method of any of the embodiments above.

A seventh aspect of the invention includes a system comprising at least one data storage in a vehicle travelling a predefined route; a first and a second wireless link along the predefined route and a first and a second storage device in functional connection with a corresponding wireless link; a first server arranged to: receive information about a multimedia content to be delivered to at least one passenger in a vehicle; receive information about a route of the at least one passenger; locate a first and a second wireless link along the route and a first and a second storage device in functional connection with a corresponding wireless link; determine a duration of playback of the multimedia content; split the multimedia content into a first and a second piece of data based at least partly on a predefined stopping schedule of the vehicle within range of the first and the second wireless link; distribute the first and the second piece of data to the first and the second storage device, respectively; deliver, in response to the vehicle stopping within range of the first wireless link, the first piece of data to at least one data storage in the vehicle for further delivery to the at least one passenger; and deliver, in response to the vehicle stopping within range of the second wireless link, the second piece of data to the at least one data storage in the vehicle for further delivery to the at least one passenger; and a second server arranged to: receive information on the passenger of the vehicle, the information comprising at least identification data of a multimedia device of the passenger; information about the route; information about the multimedia content; receive, in response to the vehicle stopping within range of a first wireless link located along the route, in at least one data storage in the vehicle a first piece of the multimedia content; deliver the first piece of the multimedia content to the multimedia device of the passenger; receive, in response to the vehicle stopping within range of a second wireless link located along the route, in the at least one data storage in the vehicle a second piece of the multimedia content; and deliver the second piece of the multimedia content to the multimedia device of the passenger.

According to an embodiment, the system is further arranged to perform the method of any of the embodiments above.

### Brief description of the drawings

The invention will now be described in more detail in connection with preferred embodiments with reference to the appended drawings, in which:
- Fig. 1: shows an example of the operating principle of a wireless data transmission in vehicular systems.
- Fig. 2: shows an example of the operating principle of a wireless data transmission in vehicular systems.
- Fig. 3: shows an example of the operating principle of a wireless data transmission in vehicular systems.
- Fig. 4: shows a flow chart of a method for wireless data transmission according to an embodiment.
- Fig. 5: shows a flow chart of a method for wireless data transmission according to an embodiment.

### Detailed description

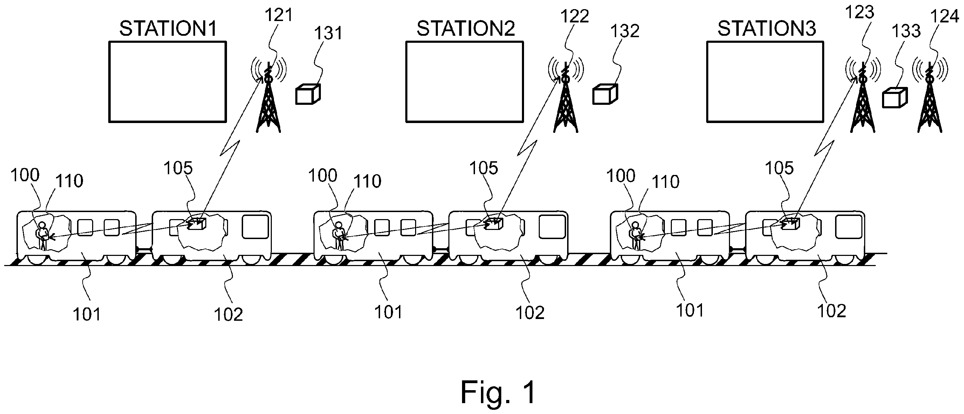

Fig. 1 shows an example of the operating principle of a wireless data transmission in vehicular systems, e.g. in public transport such as in trains or buses. Fig. 1 illustrates a rail traffic vehicle, such as a train, a tram or a metro train, travelling on the rails. The rail traffic vehicle may comprise one or more cars 101, 102, typically arranged to transport passengers. A wireless data connection, such as a Wi-Fi connection, may be offered for the passengers to be used during their trip. In Fig. 1, a passenger 100 uses his/her mobile device via a wireless connection provided by a wireless base station located in the vehicle.

The passenger may want to entertain oneself during the trip. For example, the passenger may want to watch a multimedia content, e.g. a movie, using his/her multimedia device 110, e.g. a smartphone, laptop, or a tablet computer. The passenger may not possess various movies by oneself. Thus, it may be desirable to be able to watch a movie provided by a service provider, e.g. a public transport operator. The service provider may be some other entity as well.

When purchasing a ticket for a specific route using e.g. an internet service, the passenger may desire to choose a multimedia content he/she may want to watch during the trip. The passenger may select the route for the mass transit system during ticket purchase. The passenger may select a desired multimedia content during the ticket purchase or at later time point, e.g. during the trip through the internet service or through train multimedia service. The multimedia content may be selected from a list provided by the internet service. The list may comprise at least metadata for all multimedia content that is available in the market. The passenger 100 may provide identification information of his/her multimedia device 110, e.g. a telephone number, media access control (MAC) address or some other unique identifier to the internet service.

A public transportation vehicle is typically arranged to travel a predetermined route, whereby a plurality of wireless links 121, 122, 123, 124 may be arranged along the route. The wireless links 121, 122, 123, 124 may be positioned, for example, at, or at proximity to the stations STATION1, STATION2, STATION3 or in a depot where the vehicle is configured to stop, whereby the multimedia content may be transferred from the wireless link during the stoppage.

The vehicle may comprise at least one wireless base station or a mobile communication unit, which is arranged to communicate with at least one wireless link 121, 122, 123, 124 arranged along the route of the vehicle. The mobile communication unit may be arranged to receive data from one or more data sources, such as one or more storage devices, the internet service and/or one or more devices operated by passengers, arranged in functional connection with the mobile communication unit. The mobile communication unit may comprise a receiver arranged to receive the data from the at least one wireless link 121, 122, 123, 124. The mobile communication unit may be in functional connection with at least one data storage 105 located in the vehicle.

A method for wireless data transmission in vehicular systems may comprise receiving information about a multimedia content to be delivered to at least one passenger 100 in a vehicle. Information about the multimedia content may comprise e.g. a title of a movie, a name of an actor or a director, a duration of playback time, size of the multimedia content data file etc. The information may be received by a mobile communication unit of the vehicle. The method may comprise receiving information about a route of the at least one passenger. The information about the route may comprise e.g. a starting point and a destination, an estimation of a travel time and/or distance between the starting point and the destination.

The method may comprise locating a first 121 and a second 122 wireless link along the route and a first 131 and a second 132 storage device in functional connection with a corresponding wireless link 401, 402. As shown in Fig. 1, there may be stations along the route, e.g. STATION1, STATION2, STATION3. At proximity to the stations there may be wireless links 121, 122, 123, 124 in functional connection with storage devices 131, 132, 133. The wireless links 121, 122, 123, 124 may be able to transmit large amounts of data in a short time period by using high capacity wireless transmission technologies.

Depending on the amount of data to be transmitted, an appropriate wireless transmission technology may be used. According to an embodiment, any wireless access technology defined in IEEE standard series 802.11, including multiple versions of the IEEE 802.11, such as 802.11b, 802.11 g, 802.11a, 802.11n, 802.11ac, may be used herein. According to an embodiment, the wireless links are operated according to wireless access technology defined in IEEE 802.11ad providing 60 GHz wireless transmission band with multi-gigabit throughput up 7 Gbit/s, but with a transmission range limited to about ten meters. It is, however, noted that the implementation of the embodiments disclosed herein are not limited to the WLAN technology according to any of IEEE 802.11 standard series only, but the embodiments may be applied to any similar wireless communication technology providing sufficient bandwidth.

In Fig. 1, the first wireless link 121 and the first storage device 131 may be at proximity to the STATION1, the second wireless link 402 and the second storage device 132 may be at proximity to the STATION2. Further, there may be a third wireless link 123 and a third storage device 133 in functional connection with the third wireless link 123 and at proximity to the STATION3. There may be more stations and more wireless links in functional connection with storage devices at proximity to the stations which are not shown in Fig. 1.

The method may comprise determining a duration of playback of the multimedia content. The duration of playback of the multimedia content may be determined from the received information about the multimedia content.

For example, let us suppose that the duration of playback of the multimedia content is 2.5 hours and the STATION1 is the starting point of the trip of the passenger 100. The multimedia content may be split into a first and a second piece of data based at least partly on a predefined stopping schedule of the vehicle within range of the first 121 and the second wireless link 122.

According to an embodiment, splitting the multimedia content into the first and the second piece of data may comprise determining a duration of playback of the first piece of data to correspond to at least a predetermined travel time of the vehicle from the first wireless link 401 to the second wireless link 122, i.e. from the STATION1 to the STATION2. This may be beneficial because there may not be enough time to transmit the whole multimedia content during the stoppage at proximity to the first wireless link. When the duration of playback of the first piece of data corresponds to at least a predetermined travel time of the vehicle from the first wireless link to the second wireless link, the passenger may be able to browse the content at least during that specific passage, and until the passenger may be able to receive the following pieces of data.

According to an embodiment, a third wireless link 123 along the route and a third storage device 133 in functional connection with the third wireless link 123 may be located. Splitting the multimedia content into the first and the second piece of may comprise determining a duration of playback of the second piece of data to correspond to at least a predetermined travel time of the vehicle from the second wireless link 122 to the third wireless link 123, i.e. from the STATION2 to the STATION3.

For example, according to the predefined stopping schedule a travel time from STATION1 to STATION2 may be 1h, and a travel time from STATION2 to STATION 3 may be 1.5h. Thus, the multimedia content may be split such that the first piece of data may have duration of playback of approximately 1h, and the second piece of data may have duration of playback of approximately 1.5h.

According to an embodiment, the duration of the playback of at least one piece of data is adjusted to be longer, for example 10 - 25 % longer than the estimated travel time between two consecutive wireless link. This may be beneficial because sometimes there may be unexpected delays in the travel time, and this way it may be tried to guarantee that the passenger may be able to browse the content during the passage.

The first and the second piece of data may be distributed to the first 131 and the second storage device 132, respectively. The first piece of data may be distributed to the first storage device 131 from which the first piece of data may be delivered to the at least one data storage 105 in the vehicle when the vehicle is stopped at proximity to STATION1. The second piece of data may be distributed to the second storage device 132 from which the second piece of data may be delivered to the at least one data storage 105 in the vehicle when the vehicle is stopped at proximity to STATION2. According to an embodiment, distributing the first and the second piece of data to the first 131 and the second 132 storage device, respectively, may be performed prior to the vehicle stops within range of the corresponding wireless link 121, 122. When the data or pieces of data are deposited in the storage devices and ready for the delivery, the transmission may be started quickly in response to the vehicle stopping within range of the wireless links. Starting the transmission as soon as possible in response to the vehicle stopping within range of the wireless links may partly enable the delivering of the content to be performed during the stoppage.

In response to the vehicle stopping within range of the first wireless link 121, the first piece of data may be delivered to at least one data storage 105 in the vehicle for further delivery to the at least one passenger 100. In response to the vehicle stopping within range of the second wireless link 122, the second piece of data may be delivered to the at least one data storage 105 in the vehicle for further delivery to the at least one passenger 100. The delivery from the storage device 131, 132 through the wireless link 121, 122 to the at least one data storage 105 in the vehicle may be carried out fast, e.g. in few seconds.

According to an embodiment, the pieces of data may be delivered straight to the multimedia device 110 of the passenger 100 from the storage device 131, 132, 133 if allowed by the wireless link technology to transmit data fast enough to a plurality of multimedia devices. The passenger 100 may have provided identification information of his/her multimedia device 110, e.g. a telephone number, media access control (MAC) address or some other unique identifier to the internet service. When the multimedia device 110 of the passenger 100 is within range of the wireless link 121, 122, 123, 124, e.g. during the stoppage of the vehicle, the multimedia content may be delivered to the identified multimedia device 110, instead of the data storage 105 in the vehicle. An acknowledgment message may be received in the storage device 131 from the multimedia device 110 of the passenger 100 to confirm that the correct piece of data has been delivered to the correct multimedia device. When the pieces of data are delivered straight to the multimedia device of the passenger, the passenger may receive the content more quickly and the communication unit of the vehicle may not be as loaded and may serve the other passengers more efficiently, who may not use the vehicle's Wi-Fi connection for the multimedia content service, but for some other task. The delivery may be performed as pull- or push-based delivery.

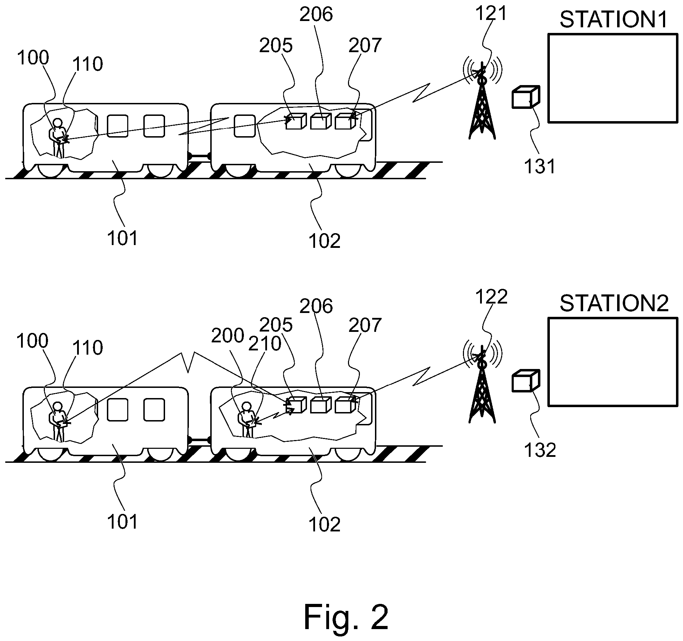

Fig. 2 shows an example of the operating principle of a wireless data transmission in vehicular systems. Information on a passenger 100, 200 of a vehicle may be received in communication unit of the vehicle. There may be at least one data storage 205, 206, 207 in the vehicle in functional communication with the communication unit. The information on the passenger 100, 200 may comprise at least identification data of a multimedia device 110, 210 of the passenger 100, 200, information about a route, and information about a multimedia content the passenger 100, 200 may desire to watch during the trip. The route may have a starting point and a destination. There may be stations along the route, e.g. STATION1 and STATION2. There may be a first wireless link 121 in functional connection with a first storage device 131 and located in proximity to the STATION1. There may be a second wireless link 122 in functional connection with a second storage device 132 and located in proximity to the STATION2.

In response to the vehicle stopping within range of the first wireless link 121 located along the route, e.g. at STATION1, a first piece of the multimedia content may be received in at least one data storage 205, 206, 207 in the vehicle. The first piece of the multimedia content may be delivered from the at least one data storage 205, 206, 207 in the vehicle to the multimedia device 110, 210 of the passenger 100, 200. In response to the vehicle stopping within range of the second wireless link 122 located along the route, e.g. at STATION2, a second piece of the multimedia content may be received in the at least one data storage 205, 206, 207 in the vehicle. The second piece of the multimedia content may be delivered to the multimedia device 110, 210 of the passenger 100, 200. The delivering may be carried out by streaming the multimedia content to the multimedia device 110, 210 of the passenger 100, 200. Alternatively or in addition, a specific piece of the multimedia content may be delivered to the multimedia device 110, 210 of the passenger 100, 200.

According to an embodiment, delivering at least one piece of the multimedia content to the multimedia device 110, 210 of the passenger 100, 200 may be performed in response to a request from the passenger 100, 200 via the multimedia device 110, 210. For example, the passenger may desire to use a maximum capacity of the wireless link of the vehicle for other purpose, e.g. for carrying out work tasks, before desiring to receive or start to watch the multimedia content.

According to an embodiment, the delivering at least one piece of the multimedia content to the multimedia device 110, 210 of the passenger 100, 200 may be carried out according to a push-based delivery. When the at least one piece of the multimedia content is received, in response to the vehicle stopping within range of the corresponding wireless link, in the at least one data storage in the vehicle, the at least one piece of the multimedia content is delivered to the corresponding multimedia device of the passenger provided that the corresponding multimedia device is within the range of the communication unit of the vehicle. This way the passenger may have the content ready to be browsed even before the passenger has e.g. found his/her seat.

According to an embodiment, a duration of playback of the first piece of the multimedia content may correspond to at least a predetermined travel time of the vehicle from the first wireless link 121 to the second wireless link 122, i.e. from the STATION1 to the STATION2. As mentioned above, there may not be enough time to transmit the whole multimedia content during the stoppage at proximity to the first wireless link. When the duration of playback of the first piece of data corresponds to at least a predetermined travel time of the vehicle from the first wireless link to the second wireless link, the passenger may be able to browse the content at least during that specific passage, and until the passenger may be able to receive the following pieces of data.

According to an embodiment, a duration of playback of the second piece of the multimedia content may correspond to at least a predetermined travel time of the vehicle from the second wireless link to a third wireless link along the predefined route.

There may be more than one passenger, e.g. a first passenger 100 and a second passenger 200, in the same vehicle who has selected the same multimedia content. The second passenger 200 may start his/her trip on STATION2. In these cases, the first piece of the multimedia content may have a different duration than the one delivered for the first passenger 100 and the first piece of the multimedia content may be distributed to a different storage device.

The passenger may decide during the trip that he/or she would like to browse a multimedia content during the trip. The passenger may transmit a selection of the multimedia content, and other needed information, e.g. identification data of the multimedia device of the passenger, information about the route etc., to the train multimedia service and receive the first piece of data when stopping to the next station.

In case the selected multimedia content is shorter than a travel time between the first 121 and the second 122 wireless link, splitting the multimedia content may not be necessary. In these cases, the passenger may receive the whole multimedia content during the first transmission of content.

The whole multimedia content, or several pieces of multimedia content, may be transmitted during the same transmission in situation when there is enough time during the stoppage to transmit the whole content and/or when the capacity of wireless transmission technology allows a fast enough delivery. For example, there may be a relative long stoppage at STATION2. Then it may be possible for the system to deliver the second and the third piece of data already at STATION2.

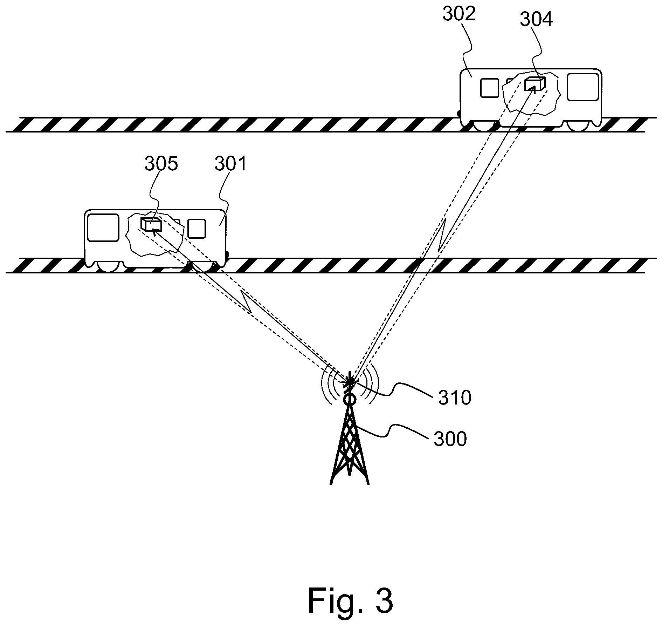

According to an embodiment, the delivery from the storage device 131, 132, 133 through the wireless link 121, 122, 123, 124 to the at least one data storage 304, 305 in the vehicle 301, 302 may be performed via a wireless link 300 comprising a directional antenna 310. Fig. 3 shows an example of the operating principle of a wireless data transmission in vehicular systems according to an embodiment. A radio wave beam of the directional antenna 310 may be directed to a preferred direction allowing for increased performance and reduced interference from unwanted sources. Location of the at least one data storage 304, 305 in the vehicle 301, 302 stopping within range of the wireless link 300 comprising the directional antenna 310 may be determined. The location may be determined by using positioning technologies such as GPS. A transmission direction for wireless delivery may be formed based on the location of the at least one data storage 304, 305 in the vehicle. The piece(s) of data may be delivered to the formed transmission direction, i.e. the radio wave beam may be directed to the determined direction which may be optimal. Alternatively, antenna arrays with beam forming may be used in wireless data transmission. Steering input for the antenna array may be formed similarly as the transmission direction for the directional antenna.

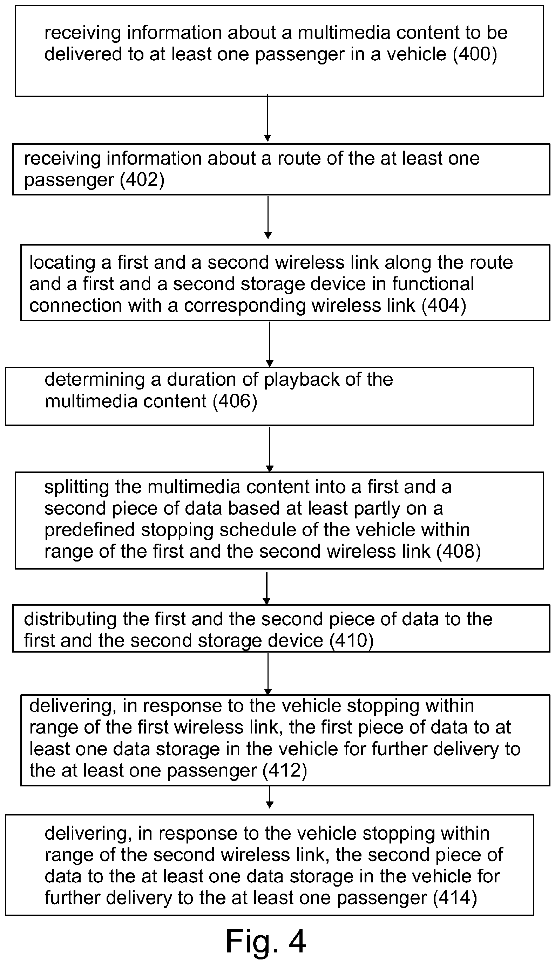

Fig. 4 shows a flow chart of a method for wireless data transmission according to a first aspect. The method comprises receiving 400 information about a multimedia content to be delivered to at least one passenger in a vehicle; receiving 402 information about a route of the at least one passenger; locating 404 a first and a second wireless link along the route and a first and a second storage device in functional connection with a corresponding wireless link; determining 406 a duration of playback of the multimedia content; splitting 408 the multimedia content into a first and a second piece of data based at least partly on a predefined stopping schedule of the vehicle within range of the first and the second wireless link; distributing 410 the first and the second piece of data to the first and the second storage device, respectively; delivering 412, in response to the vehicle stopping within range of the first wireless link, the first piece of data to at least one data storage in the vehicle for further delivery to the at least one passenger; and delivering 414, in response to the vehicle stopping within range of the second wireless link, the second piece of data to the at least one data storage in the vehicle for further delivery to the at least one passenger.

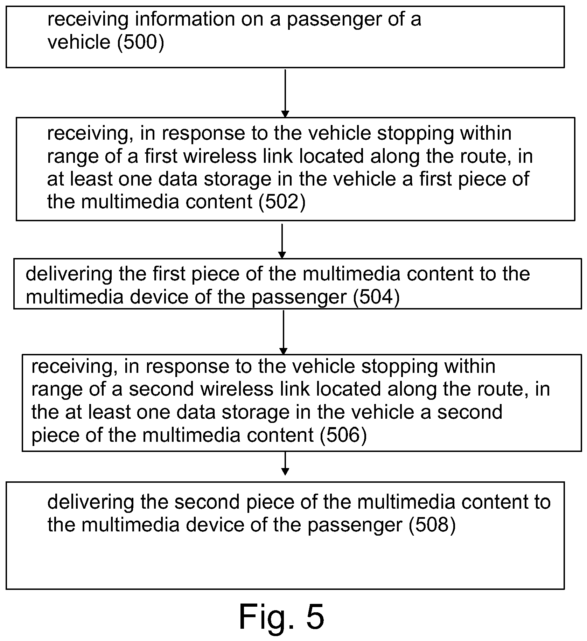

Fig. 5 shows a flowchart of a method for wireless data transmission according to a second aspect. The method comprises receiving 500 information on a passenger of a vehicle, the information comprising at least identification data of a multimedia device of the passenger; information about a route; information about a multimedia content to be delivered to the passenger; receiving 502, in response to the vehicle stopping within range of a first wireless link located along the route, in at least one data storage in the vehicle a first piece of the multimedia content; delivering 504 the first piece of the multimedia content to the multimedia device of the passenger; receiving 506, in response to the vehicle stopping within range of a second wireless link located along the route, in the at least one data storage in the vehicle a second piece of the multimedia content; and delivering 508 the second piece of the multimedia content to the multimedia device of the passenger.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such non-transitory physical media as memory chips, or memory blocks implemented within the processor, magnetic media such as hard disk or floppy disks, and optical media such as for example DVD and the data variants thereof, CD.

A skilled man appreciates that any of the embodiments described above may be implemented as a combination with one or more of the other embodiments, unless there is explicitly or implicitly stated that certain embodiments are only alternatives to each other.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A method comprising
receiving (400) information about a multimedia content to be delivered to at least one passenger in a vehicle;
receiving (402) information about a route of the at least one passenger;
locating (404) a first and a second wireless link along the route and a first and a second storage device in functional connection with a corresponding wireless link, wherein the first and the second wireless links have different ranges and are operated according to wireless access technology defined in IEEE standard 802.11ad;
determining (406) a duration of playback of the multimedia content;
splitting (408) the multimedia content into a first and a second piece of data based at least partly on a predefined stopping schedule of the vehicle comprising at least one data storage within range of the first and the second wireless link;
distributing the first and the second piece of data to the first and the second storage device, respectively;
delivering (412), in response to the vehicle stopping within range of the first wireless link, the first piece of data to the at least one data storage in the vehicle for further delivery to the at least one passenger; and
delivering (414), in response to the vehicle stopping within range of the second wireless link, the second piece of data to the at least one data storage in the vehicle for further delivery to the at least one passenger.

2. The method according to the claim 1, wherein
splitting the multimedia content into the first and the second piece of data comprises:
determining a duration of playback of the first piece of data to correspond to at least a predetermined travel time of the vehicle from the first wireless link to the second wireless link.

3. The method according to the claim 1 or 2, further comprising
locating a third wireless link along the route and a third storage device in functional connection with the third wireless link; and wherein splitting the multimedia content into the first and the second piece of data comprises:
determining a duration of playback of the second piece of data to correspond to at least a predetermined travel time of the vehicle from the second wireless link to the third wireless link.

4. The method according to any of the claims 1 to 3, wherein distributing the first and the second piece of data to the first and the second storage device, respectively, is performed prior to the vehicle stops within range of the corresponding wireless link.

5. The method according to any of the claims 1 to 4, further comprising
determining location of the at least one data storage in the vehicle stopping within range of the first wireless link, the first wireless link comprising a directional antenna;
forming a transmission direction for wireless delivery based on the location of the at least one data storage in the vehicle; and
delivering the first piece of data to the transmission direction.

6. A server arranged to
receive information about a multimedia content to be delivered to at least one passenger in a vehicle;
receive information about a route of the at least one passenger;
locate a first and a second wireless link along the route and a first and a second storage device in functional connection with a corresponding wireless link, wherein the first and the second wireless links have different ranges and are operated according to wireless access technology defined in IEEE standard 802.11 ad;
determine a duration of playback of the multimedia content;
split the multimedia content into a first and a second piece of data based at least partly on a predefined stopping schedule of the vehicle comprising at least one data storage within range of the first and the second wireless link; distribute the first and the second piece of data to the first and the second storage device, respectively;
deliver, in response to the vehicle stopping within range of the first wireless link, the first piece of data to the at least one data storage in the vehicle for further delivery to the at least one passenger; and
deliver, in response to the vehicle stopping within range of the second wireless link, the second piece of data to the at least one data storage in the vehicle for further delivery to the at least one passenger.

7. The server according to claim 6, further arranged to perform the method of any of the claims 2 to 5.

8. A computer program product, comprising computer program code embodied on a computer readable medium, wherein said computer program code is, when executed on a processor of a computer, arranged to cause the computer to perform the method of any of the claims 1 to 5.

9. A method comprising
receiving (500) information on a passenger of a vehicle, the information comprising at least
identification data of a multimedia device of the passenger;
information about a route;
information about a multimedia content to be delivered to the passenger;
receiving (502), in response to the vehicle stopping within range of a first wireless link located along the route, in at least one data storage in the vehicle a first piece of the multimedia content;
delivering (504) the first piece of the multimedia content to the multimedia device of the passenger;
receiving (506), in response to the vehicle stopping within range of a second wireless link located along the route, in the at least one data storage in the vehicle a second piece of the multimedia content; and
delivering (508) the second piece of the multimedia content to the multimedia device of the passenger, wherein the first and the second wireless links have different ranges and are operated according to wireless access technology defined in IEEE standard 802.11a.

10. The method according to claim 9, wherein delivering at least one piece of the multimedia content to the multimedia device of the passenger is performed in response to a request from the multimedia device.

11. The method according to claim 9, wherein delivering at least one piece of the multimedia content to the multimedia device of the passenger is performed as a push-based delivery.

12. The method according to the claim 10 or 11, wherein a duration of playback of the first piece of the multimedia content corresponds to at least a predetermined travel time of the vehicle from the first wireless link to the second wireless link.

13. A server arranged to
receive information on a passenger of a vehicle, the information comprising at least
identification data of a multimedia device of the passenger;
information about a route;
information about a multimedia content to be delivered to the passenger;
receive, in response to the vehicle stopping within range of a first wireless link located along the route, in at least one data storage in the vehicle a first piece of the multimedia content;
deliver the first piece of the multimedia content to the multimedia device of the passenger;
receive, in response to the vehicle stopping within range of a second wireless link located along the route, in the at least one data storage in the vehicle a second piece of the multimedia content; and
deliver the second piece of the multimedia content to the multimedia device of the passenger, wherein the first and the second wireless links have different ranges and are operated according to wireless access technology defined in IEEE standard 802.11 a.

14. The server according to claim 13, further arranged to perform the method of any of the claims 10 to 12.

15. A computer program product, comprising computer program code embodied on a computer readable medium, wherein said computer program code is, when executed on a processor of a computer, arranged to cause the computer to perform the method of any of the claims 9 to 12.

## Patentansprüche

1. Verfahren, umfassend
Empfangen (400) von Informationen über einen Multimedia-Inhalt, der an mindestens einen Insassen in einem Fahrzeug zu liefern ist;
Empfangen (402) von Informationen über eine Route des mindestens einen Insassen;
Auffinden (404) einer ersten und einer zweiten drahtlosen Verbindung entlang der Route und einer ersten und einer zweiten Speichervorrichtung in funktionaler Verbindung mit einer entsprechenden drahtlosen Verbindung, wobei die erste und die zweite drahtlose Verbindung unterschiedliche Reichweiten aufweisen und gemäß der in dem Standard IEEE 802.11 ad definierten drahtlosen Zugangstechnologie betrieben werden;
Bestimmen (406) einer Wiedergabedauer des Multimedia-Inhalts;
Aufteilen (408) des Multimedia-Inhalts in ein erstes und ein zweites Datenstück mindestens teilweise auf Grundlage eines vordefinierten Halteplans des Fahrzeugs, umfassend mindestens einen Datenspeicher in Reichweite der ersten und der zweiten drahtlosen Verbindung;
Verteilen des ersten und des zweiten Datenstücks an die erste bzw. die zweite Speichervorrichtung;
Liefern (412) des ersten Datenstücks an den mindestens einen Datenspeicher in dem Fahrzeug zur weiteren Lieferung an den mindestens einen Insassen als Reaktion darauf, dass das Fahrzeug innerhalb der Reichweite der ersten drahtlosen Verbindung anhält; und
Liefern (414) des zweiten Datenstücks an den mindestens einen Datenspeicher in dem Fahrzeug zur weiteren Lieferung an den mindestens einen Insassen als Reaktion darauf, dass das Fahrzeug in Reichweite der zweiten drahtlosen Verbindung anhält.

2. Verfahren nach Anspruch 1, wobei
das Aufteilen des Multimedia-Inhalts in das erste und das zweite Datenstück umfasst:
Bestimmen einer Wiedergabedauer des ersten Datenstücks, um mindestens einer vorbestimmten Fahrzeit des Fahrzeugs von der ersten drahtlosen Verbindung zu der zweiten drahtlosen Verbindung zu entsprechen.

3. Verfahren nach Anspruch 1 oder 2, ferner umfassend Auffinden einer dritten drahtlosen Verbindung entlang der Route und einer dritten Speichervorrichtung in funktionaler Verbindung mit der dritten drahtlosen Verbindung; und wobei das Aufteilen des Multimedia-Inhaltse in das erste und das zweite Datenstück umfasst:
Bestimmen einer Wiedergabedauer des zweiten Datenstücks, um mindestens einer vorbestimmten Fahrzeit des Fahrzeugs von der zweiten drahtlosen Verbindung zu der dritten drahtlosen Verbindung zu entsprechen.

4. Verfahren nach einem der Ansprüche 1 bis 3, wobei das Verteilen des ersten und des zweiten Datenstücks an die erste bzw. die zweite Speichervorrichtung durchgeführt wird, bevor das Fahrzeug in Reichweite der entsprechenden drahtlosen Verbindung anhält.

5. Verfahren nach einem der Ansprüche 1 bis 4, ferner umfassend Bestimmen eines Orts des mindestens einen Datenspeichers in dem Fahrzeug, das in Reichweite der ersten drahtlosen Verbindung anhält, wobei die erste drahtlose Verbindung eine Richtantenne umfasst;
Bilden einer Übertragungsrichtung zur drahtlosen Lieferung auf Grundlage des Orts des mindestens einen Datenspeichers in dem Fahrzeug; und
Liefern des ersten Datenstücks an die Übertragungsrichtung.

6. Server, eingerichtet zum
Empfangen von Informationen über einen Multimedia-Inhalt, der an mindestens einen Insassen in einem Fahrzeug zu liefern ist;
Empfangen von Informationen über eine Route des mindestens einen Insassen;
Auffinden einer ersten und einer zweiten drahtlosen Verbindung entlang der Route und einer ersten und einer zweiten Speichervorrichtung in funktionaler Verbindung mit einer entsprechenden drahtlosen Verbindung, wobei die erste und die zweite drahtlose Verbindung unterschiedliche Reichweiten aufweisen und gemäß der in dem Standard IEEE 802.11ad definierten drahtlosen Zugangstechnologie betrieben werden;
Bestimmen einer Wiedergabedauer des Multimedia-Inhalts;
Aufteilen des Multimedia-Inhalts in ein erstes und ein zweites Datenstück mindestens teilweise auf Grundlage eines vordefinierten Halteplans des Fahrzeugs, umfassend mindestens einen Datenspeicher in Reichweite der ersten und der zweiten drahtlosen Verbindung;
Verteilen des ersten und des zweiten Datenstücks an die erste bzw. die zweite Speichervorrichtung;
Liefern des ersten Datenstücks an den mindestens einen Datenspeicher in dem Fahrzeug zur weiteren Lieferung an den mindestens einen Insassen als Reaktion darauf, dass das Fahrzeug innerhalb der Reichweite der ersten drahtlosen Verbindung anhält; und
Liefern des zweiten Datenstücks an den mindestens einen Datenspeicher in dem Fahrzeug zur weiteren Lieferung an den mindestens einen Insassen als Reaktion darauf, dass das Fahrzeug in Reichweite der zweiten drahtlosen Verbindung anhält.

7. Server nach Anspruch 6, ferner eingerichtet, das Verfahren nach einem der Ansprüche 2 bis 5 durchzuführen.

8. Computerprogrammprodukt, umfassend Computerprogrammcode, der auf einem computerlesbaren Medium enthalten ist, wobei der Computerprogrammcode, wenn er auf einem Prozessor eines Computers ausgeführt wird, eingerichtet ist, den Computer zu veranlassen, das Verfahren nach einem der Ansprüche 1 bis 5 durchzuführen.

9. Verfahren, umfassend
Empfangen (500) von Informationen über einen Insassen eines Fahrzeugs, wobei die Informationen mindestens Folgendes umfassen:
Identifikationsdaten einer Multimedia-Vorrichtung des Insassen;
Informationen über eine Route;
Informationen über einen Multimedia-Inhalt, der an den Insassen zu liefern ist;
Empfangen (502) eines ersten Stücks des Multimedia-Inhalts in mindestens einem Datenspeicher in dem Fahrzeug als Reaktion darauf, dass das Fahrzeug in Reichweite einer ersten drahtlosen Verbindung anhält, die sich entlang der Route befindet;
Liefern (504) des ersten Stücks des Multimedia-Inhalts an die Multimedia-Vorrichtung des Insassen;
Empfangen (506) eines zweiten Stücks des Multimedia-Inhalts in dem mindestens einen Datenspeicher in dem Fahrzeug als Reaktion darauf, dass das Fahrzeug in Reichweite einer zweiten drahtlosen Verbindung anhält, die sich entlang der Route befindet; und Liefern (508) des zweiten Stücks des Multimediainhalts an die Multimedia-Vorrichtung des Insassen, wobei die erste und die zweite drahtlose Verbindung unterschiedliche Reichweiten aufweisen und gemäß der in dem Standard IEEE 802.11 a definierten drahtlosen Zugangstechnologie betrieben werden.

10. Verfahren nach Anspruch 9, wobei ein Liefern von mindestens einem Stück des Multimedia-Inhalts zu der Multimedia-Vorrichtung des Insassen als Reaktion auf eine Anfrage von der Multimedia-Vorrichtung durchgeführt wird.

11. Verfahren nach Anspruch 9, wobei ein Liefern von mindestens einem Stück des Multimedia-Inhalts an die Multimedia-Vorrichtung des Insassen als Push-basierte Lieferung durchgeführt wird.

12. Verfahren nach Anspruch 10 oder 11, wobei eine Wiedergabedauer des ersten Stücks des Multimedia-Inhalts mindestens einer vorgegebenen Fahrzeit des Fahrzeugs von der ersten drahtlosen Verbindung zu der zweiten drahtlosen Verbindung entspricht.

13. Server, eingerichtet zum
Empfangen von Informationen über einen Insassen eines Fahrzeugs, wobei die Informationen mindestens Folgendes umfassen:
Identifikationsdaten einer Multimedia-Vorrichtung des Insassen;
Informationen über eine Route;
Informationen über einen Multimedia-Inhalt, der an den Insassen zu liefern ist;
Empfangen eines ersten Stücks des Multimedia-Inhalts in mindestens einem Datenspeicher in dem Fahrzeug als Reaktion darauf, dass das Fahrzeug in Reichweite einer ersten drahtlosen Verbindung anhält, die sich entlang der Route befindet;
Liefern des ersten Stücks des Multimedia-Inhalts an die Multimedia-Vorrichtung des Insassen;
Empfangen eines zweiten Stücks des Multimedia-Inhalts in dem mindestens einen Datenspeicher in dem Fahrzeug als Reaktion darauf, dass das Fahrzeug in Reichweite einer zweiten drahtlosen Verbindung anhält, die sich entlang der Route befindet; und Liefern des zweiten Stücks des Multimediainhalts an die Multimedia-Vorrichtung des Insassen, wobei die erste und die zweite drahtlose Verbindung unterschiedliche Reichweiten aufweisen und gemäß der in dem Standard IEEE 802.11 a definierten drahtlosen Zugangstechnologie betrieben werden.

14. Server nach Anspruch 13, ferner eingerichtet, um das Verfahren nach einem der Ansprüche 10 bis 12 durchzuführen.

15. Computerprogrammprodukt, umfassend Computerprogrammcode, der auf einem computerlesbaren Medium enthalten ist, wobei der Computerprogrammcode, wenn er auf einem Prozessor eines Computers ausgeführt wird, eingerichtet ist, den Computer zu veranlassen, das Verfahren nach einem der Ansprüche 9 bis 12 durchzuführen.

## Revendications

1. Un procédé comprenant la réception (400) d'informations relatives à un contenu multimédia à remettre à au moins un passager dans un véhicule,
la réception (402) d'informations relatives à un itinéraire du au moins un passager,
la localisation (404) d'une première et d'une deuxième liaison sans fil le long de l'itinéraire et d'un premier et d'un deuxième dispositif à mémoire en connexion fonctionnelle avec une liaison sans fil correspondante, les première et deuxième liaisons sans fil possédant des portées différentes et étant actionnées en fonction d'une technologie d'accès sans fil définie dans la norme IEEE 802.11 ad,
la détermination (406) d'une durée de lecture du contenu multimédia,
la division (408) du contenu multimédia en un premier et un deuxième élément de données en fonction au moins en partie d'un calendrier d'arrêt prédéfini du véhicule comprenant au moins un espace mémoire de données à l'intérieur de la portée de la première et de la deuxième liaison sans fil,
la distribution du premier et du deuxième élément de données au premier et au deuxième dispositif à mémoire, respectivement,
la remise (412), en réponse à l'arrêt du véhicule à l'intérieur de la portée de la première liaison sans fil, du premier élément de données au au moins un espace mémoire de données dans le véhicule pour une remise complémentaire au au moins un passager, et
la remise (414), en réponse à l'arrêt du véhicule à l'intérieur de la portée de la deuxième liaison sans fil, du deuxième élément de données au au moins un espace mémoire de données dans le véhicule pour une remise complémentaire au au moins un passager.

2. Le procédé selon la revendication 1, dans lequel
la division du contenu multimédia en le premier et le deuxième élément de données comprend :
la détermination d'une durée de lecture du premier élément de données de façon à correspondre à au moins un temps de parcours prédéterminé du véhicule de la première liaison sans fil à la deuxième liaison sans fil.

3. Le procédé selon la revendication 1 ou 2, comprenant en outre
la localisation d'une troisième liaison sans fil le long de l'itinéraire et d'un troisième dispositif à mémoire en connexion fonctionnelle avec la troisième liaison sans fil, et dans lequel la division du contenu multimédia en le premier et le deuxième élément de données comprend :
la détermination d'une durée de lecture du deuxième élément de données de façon à correspondre à au moins un temps de parcours prédéterminé du véhicule de la deuxième liaison sans fil à la troisième liaison sans fil.

4. Le procédé selon l'une quelconque des revendications 1 à 3, dans lequel la distribution du premier et du deuxième élément de données au premier et au deuxième dispositif à mémoire, respectivement, est exécutée avant l'arrêt du véhicule à l'intérieur de la portée de la liaison sans fil correspondante.

5. Le procédé selon l'une quelconque des revendications 1 à 4, comprenant en outre la détermination de l'emplacement du au moins un espace mémoire de données dans le véhicule s'arrêtant à l'intérieur de la portée de la première liaison sans fil, la première liaison sans fil comprenant une antenne directionnelle,
la formation d'une direction de transmission destinée à une remise sans fil en fonction de l'emplacement du au moins un espace mémoire de données dans le véhicule, et
la remise du premier élément de données à la direction de transmission.

6. Un serveur agencé de façon à
recevoir des informations relatives à un contenu multimédia à remettre à au moins un passager dans un véhicule,
recevoir des informations relatives à un itinéraire du au moins un passager,
localiser une première et une deuxième liaison sans fil le long de l'itinéraire et un premier et un deuxième dispositif à mémoire en connexion fonctionnelle avec une liaison sans fil correspondante, les première et deuxième liaisons sans fil possédant des portées différentes et étant actionnées en fonction d'une technologie d'accès sans fil définie dans la norme IEEE 802.11 ad,
déterminer une durée de lecture du contenu multimédia,
diviser le contenu multimédia en un premier et un deuxième élément de données en fonction au moins en partie d'un calendrier d'arrêt prédéfini du véhicule comprenant au moins un espace mémoire de données à l'intérieur de la portée de la première et de la deuxième liaison sans fil,
distribuer le premier et le deuxième élément de données au premier et au deuxième dispositif à mémoire, respectivement,
remettre, en réponse à l'arrêt du véhicule à l'intérieur de la portée de la première liaison sans fil, le premier élément de données au au moins un espace mémoire de données dans le véhicule pour une remise complémentaire au au moins un passager, et
remettre, en réponse à l'arrêt du véhicule à l'intérieur de la portée de la deuxième liaison sans fil, le deuxième élément de données au au moins un espace mémoire de données dans le véhicule pour une remise complémentaire au au moins un passager.

7. Le serveur selon la revendication 6, agencé en outre de façon à exécuter le procédé selon l'une quelconque des revendications 2 à 5.

8. Un produit de programme informatique, comprenant du code de programme informatique incorporé sur un support lisible par ordinateur, ledit code de programme informatique étant, lorsqu'il est exécuté sur un processeur d'un ordinateur, agencé de façon à amener l'ordinateur à exécuter le procédé selon l'une quelconque des revendications 1 à 5.

9. Un procédé comprenant
la réception (500) d'information relatives à un passager d'un véhicule, les informations comprenant au moins
des données d'identification d'un dispositif multimédia du passager,
des informations relatives à un itinéraire,
des informations relatives à un contenu multimédia à remettre au passager,
la réception (502), en réponse à l'arrêt du véhicule à l'intérieur de la portée d'une première liaison sans fil située le long de l'itinéraire, dans au moins un espace mémoire de données dans le véhicule, d'un premier morceau du contenu multimédia,
la remise (504) du premier morceau du contenu multimédia au dispositif multimédia du passager,
la réception (506), en réponse à l'arrêt du véhicule à l'intérieur de la portée d'une deuxième liaison sans fil située le long de l'itinéraire, dans le au moins un espace mémoire de données dans le véhicule, d'un deuxième morceau du contenu multimédia, et
la remise (508) du deuxième morceau du contenu multimédia au dispositif multimédia du passager, les première et deuxième liaisons sans fil possédant des portées différentes et étant actionnées en fonction d'une technologie d'accès sans fil définie dans la norme IEEE 802.11 a.

10. Le procédé selon la revendication 9, dans lequel la remise d'au moins un morceau du contenu multimédia au dispositif multimédia du passager est exécutée en réponse à une demande provenant du dispositif multimédia.

11. Le procédé selon la revendication 9, dans lequel la remise d'au moins un morceau du contenu multimédia au dispositif multimédia du passager est exécutée sous la forme d'une remise de type pousser.

12. Le procédé selon la revendication 10 ou 11, dans lequel une durée de lecture du premier morceau du contenu multimédia correspond à au moins un temps de parcours prédéterminé du véhicule de la première liaison sans fil à la deuxième liaison sans fil.

13. Un serveur agencé de façon à
recevoir des informations relatives à un passager d'un véhicule, les informations comprenant au moins
des données d'identification d'un dispositif multimédia du passager,
des informations relatives à un itinéraire,
des informations relatives à un contenu multimédia à remettre au passager,
recevoir, en réponse à l'arrêt du véhicule à l'intérieur de la portée d'une première liaison sans fil située le long de l'itinéraire, dans au moins un espace mémoire de données dans le véhicule, un premier morceau du contenu multimédia,
remettre le premier morceau du contenu multimédia au dispositif multimédia du passager,
recevoir, en réponse à l'arrêt du véhicule à l'intérieur de la portée d'une deuxième liaison sans fil située le long de l'itinéraire, dans le au moins un espace mémoire de données dans le véhicule, un deuxième morceau du contenu multimédia, et
remettre le deuxième morceau du contenu multimédia au dispositif multimédia du passager, les première et deuxième liaisons sans fil possédant des portées différentes et étant actionnées en fonction d'une technologie d'accès sans fil définie dans la norme IEEE 802.11a.

14. Le serveur selon la revendication 13, agencé en outre de façon à exécuter le procédé selon l'une quelconque des revendications 10 à 12.

15. Un produit de programme informatique, comprenant du code de programme informatique incorporé sur un support lisible par ordinateur, ledit code de programme informatique étant, lorsqu'il est exécuté sur un processeur d'un ordinateur, agencé de façon à amener l'ordinateur à exécuter le procédé selon l'une quelconque des revendications 9 à 12.
